# EUROPÄISCHE PATENTANMELDUNG

(11) **EP 4 802 966 A1**
(43) Veröffentlichungstag der Anmeldung: **09.09.2026**
(21) Anmeldenummer: 25161621.5
(22) Anmeldetag: 04.03.2025
(51) Int. Cl.: A47J 31/42, A47J 42/50

(54) **KAFFEEVOLLAUTOMAT MIT EINEM BOHNENBEHÄLTER**

(71) Anmelder: Guangdong Midea Consumer Electric Manufacturing Co., Ltd., Foshan, Guangdong 528311 (CN)
(72) Erfinder: Glisic, Zeljko, 71034 Böblingen (DE)
(74) Vertreter: Dorow, Florian

(57) **Zusammenfassung**

Die Erfindung betrifft einen Kaffeevollautomat (1), aufweisend ein Gehäuse (2), eine im Gehäuse (2) angeordnete Brüheinheit (3), die ausgebildet ist zum Aufbrühen einer Portion von gemahlenem Kaffeepulver mit heißem Wasser, ein der Brüheinheit (3) vorgelagertes Mahlwerk (5), das ausgebildet ist zum portionsweisen Mahlen von ganzen Kaffeebohnen zu einem gemahlenen Kaffeepulver, sowie einen dem Mahlwerk (5) vorgelagerten Bohnenbehälter (6), der ausgebildet ist zum Bevorraten einer für mehrere Portionen von gemahlenem Kaffeepulver ausreichenden Menge an ganzen Kaffeebohnen in dem Kaffeevollautomat (1), wobei der Bohnenbehälter (6) eine mit einer Austragsöffnung (7) versehene Bodenwand (8) und wenigstens eine Seitenwand (9) aufweist, wobei die Bodenwand (8) und die wenigstens eine Seitenwand (9) einen Vorratsraum (10) für die ganzen Kaffeebohnen begrenzen, wobei der Bohnenbehälter (6) um eine durch die Austrittsöffnung (7) der Bodenwand (8) des Bohnenbehälters (6) laufende vertikale Drehachse (D) zwischen einer Befüllungsstellung, in der eine Einfüllöffnung (11) des Bohnenbehälters (6) zum manuellen Einfüllen von ganzen Bohnen in den Vorratsraum (10) des Bohnenbehälters (6) zugänglich ist, und einer Betriebsstellung, in der die Einfüllöffnung (11) des Bohnenbehälters (6) innerhalb des Gehäuses (2) verborgen ist, schwenkbar an dem Gehäuse (2) des Kaffeevollautomaten (1) gelagert ist.

## Beschreibung

Die Erfindung betrifft einen Kaffeevollautomat, aufweisend ein Gehäuse, eine im Gehäuse angeordnete Brüheinheit, die ausgebildet ist zum Aufbrühen einer Portion von gemahlenem Kaffeepulver mit heißem Wasser, ein der Brüheinheit vorgelagertes Mahlwerk, das ausgebildet ist zum portionsweisen Mahlen von ganzen Kaffeebohnen zu einem gemahlenen Kaffeepulver, sowie einen dem Mahlwerk vorgelagerten Bohnenbehälter, der ausgebildet ist zum Bevorraten einer für mehrere Portionen von gemahlenem Kaffeepulver ausreichenden Menge an ganzen Kaffeebohnen in dem Kaffeevollautomat, wobei der Bohnenbehälter eine mit einer Austragsöffnung versehene Bodenwand und wenigstens eine Seitenwand aufweist, wobei die Bodenwand und die wenigstens eine Seitenwand einen Vorratsraum für die ganzen Kaffeebohnen begrenzen.

Die EP 2 915 469 A1 beschreibt eine Vorrichtung zur Zuführung von Kaffeebohnen zu einer Mahleinheit, insbesondere für einen Kaffeevollautomaten, umfassend mindestens einen Vorratsbehälter, der zu der Mahleinheit über ein Verschlusselement verschließbar ist, und von dem Kaffeebohnen bei geöffnetem Verschlusselement zu der Mahleinheit förderbar sind, wobei mindestens ein Schacht für Kaffeebohnen, der direkt zu der Mahleinheit führt und zur Aufnahme von Kaffeebohnen für eine oder zwei Brühportionen vorgesehen ist.

Aufgabe der Erfindung ist es, einen Kaffeevollautomat zu schaffen, bei dem Kaffeebohnen auf einfache und bequeme Weise in einen Bohnenbehälter des Kaffeevollautomaten eingefüllt werden können.

Die Aufgabe wird gelöst durch einen Kaffeevollautomat, aufweisend:
- ein Gehäuse,
- eine im Gehäuse angeordnete Brüheinheit, die ausgebildet ist zum Aufbrühen einer Portion von gemahlenem Kaffeepulver mit heißem Wasser,
- ein der Brüheinheit vorgelagertes Mahlwerk, das ausgebildet ist zum portionsweisen Mahlen von ganzen Kaffeebohnen zu einem gemahlenen Kaffeepulver, sowie
- einen dem Mahlwerk vorgelagerten Bohnenbehälter, der ausgebildet ist zum Bevorraten einer für mehrere Portionen von gemahlenem Kaffeepulver ausreichenden Menge an ganzen Kaffeebohnen in dem Kaffeevollautomat, wobei der Bohnenbehälter eine mit einer Austragsöffnung versehene Bodenwand und wenigstens eine Seitenwand aufweist, wobei die Bodenwand und die wenigstens eine Seitenwand einen Vorratsraum für die ganzen Kaffeebohnen begrenzen, wobei
der Bohnenbehälter um eine durch die Austrittsöffnung der Bodenwand des Bohnenbehälters laufende vertikale Drehachse zwischen einer Befüllungsstellung, in der eine Einfüllöffnung des Bohnenbehälters zum manuellen Einfüllen von ganzen Bohnen in den Vorratsraum des Bohnenbehälters zugänglich ist, und einer Betriebsstellung, in der die Einfüllöffnung des Bohnenbehälters innerhalb des Gehäuses verborgen ist, schwenkbar an dem Gehäuse des Kaffeevollautomaten gelagert ist.

Kaffeevollautomaten dienen der vollautomatischen Zubereitung wenigstens einer Kaffeegetränkevariante, wie beispielsweise eines Espresso, eines Cappuccino, eines Cafe Crema oder eines Latte Macchiato. Der entsprechende Brühvorgang wird dabei automatisch durchgeführt, nachdem eine Person an einem Eingabemittel die gewünschte Kaffeegetränkevariante manuell ausgewählt hat und eine elektronische Steuervorrichtung des Kaffeevollautomaten den automatischen Brühvorgang startet. Dazu wird aus einem Bohnenbehälter des Kaffeevollautomaten eine entsprechend benötigte Menge an ganzen Kaffeebohnen automatisch entnommen und einem Mahlwerk des Kaffeevollautomaten zugeführt, so dass in dem Mahlwerk die ganzen Kaffeebohnen automatisch zu einem benötigten Kaffeepulver gemahlen werden. Die gemahlene Portion an Kaffeepulver wird dann automatisch einer Brüheinheit des Kaffeevollautomaten zugeführt, in welcher der eigentliche Brühvorgang stattfindet. Die Brüheinheit umfasst dazu eine Brühkammer, in der die zugeführte Portion Kaffeepulver zunächst automatisch verdichtet wird und anschließend unter hohem Druck mit zugeführtem heißen Wasser durchströmt wird. Während eines solchen Durchströmens des verdichteten Kaffeepulvers mit heißem Wasser werden die gewünschten Aromastoffe und weitere Inhaltsstoffe in das Wasser übertragen und ein flüssiges Kaffeeextrakt gebildet, welches abschließend über eine Düse des Kaffeevollautomaten an einer Zapfstelle des Kaffeevollautomaten beispielsweise in eine Tasse oder ein Glas automatisch ausgegeben wird. Bei der Ausgabe des flüssiges Kaffeeextrakts kann optional entsprechend der gewünschten Kaffeegetränkevariante zusätzlich eine Portion Milch, Milchschaum oder ergänzendes Wasser automatisch zudosiert werden.

Zur Aufrechterhaltung der Betriebsfähigkeit des Kaffeevollautomaten ist ein entleerter Bohnenbehälter manuell mit neuen ganzen Kaffeebohnen aus einer Kaffeebohnenpackung nachzubefüllen.

Bei bisherigen Kaffeevollautomaten ist es bekannt, einen nach oben hin offenen Bohnenbehälter vorzusehen, der an einer Oberseite des Kaffeevollautomaten fest installiert ist und dessen obere Öffnung durch einen separaten Deckel verschlossen ist, wobei der Deckel manuell entfernt werden kann, um die Öffnung des fest installierten Bohnenbehälters freizugeben, so dass ganze Kaffeebohnen nachgefüllt werden können. Nachteilig hierbei ist es jedoch, dass die Oberseite des Kaffeevollautomaten freigehalten werden muss, damit der Deckel zugänglich bleibt, um diesen bei Bedarf abnehmen zu können. Nachteilig ist dabei auch der Umstand, dass die Gefahr besteht, dass der separate Deckel verloren geht.

Bei bisherigen Kaffeevollautomaten ist es auch bekannt, einen im Inneren des Kaffeevollautomaten verborgenen Bohnenbehälter vorzusehen, der dann schubladenartig aus dem Gehäuse des Kaffeevollautomaten manuell herausgezogen werden kann, so dass der vom Kaffeevollautomaten getrennte Bohnenbehälter mit neuen ganzen Kaffeebohnen befüllt werden kann und anschließend der befüllte Bohnenbehälter wieder in den Kaffeevollautomaten eingeschoben werden kann. Nachteilig ist hierbei jedoch, dass an einer bodenseitigen Austragsöffnung des Bohnenbehälters eine automatische Verschlusseinrichtung vorgesehen sein muss, die verhindert, dass bei aus dem Kaffeevollautomat entnommenem Bohnenbehälter die neu eingefüllten Kaffeebohnen unmittelbar wieder über die Austragsöffnung entweichen, noch ehe der Bohnenbehälter wieder in den Kaffeevollautomaten eingesetzt werden kann.

Darüber hinaus besteht das Problem, dass während und nach der manuellen Entnahme des Bohnenbehälters aus dem Kaffeevollautomaten, eine Eintrittsöffnung des Mahlwerks freiliegt, da die Austragsöffnung des Bohnenbehälters die Eintrittsöffnung des Mahlwerks nicht mehr abdeckt, und daher einzelne Bohnen oder Bohnenbruchstücke sich von der Eintrittsöffnung des Mahlwerks lösen können und den Innenraum des Kaffeevollautomaten in unerwünschter Weise verschmutzen können. Ähnlich nachteilig verhält es sich bei Kaffeevollautomaten bei denen ein manuell entnehmbarer Bohnenbehälter in einer nach oben gehenden Richtung aus dem Kaffeevollautomaten herausgezogen werden kann. Auch hierbei wird die Eintrittsöffnung des Mahlwerks in ungünstiger Weise freigelegt und der entnommene Bohnenbehälter benötigt für seine Austragsöffnung auch eine automatische Verschlusseinrichtung.

Indem erfindungsgemäß der Bohnenbehälter um eine durch die Austrittsöffnung der Bodenwand des Bohnenbehälters laufende vertikale Drehachse zwischen einer Befüllungsstellung, in der eine Einfüllöffnung des Bohnenbehälters zum manuellen Einfüllen von ganzen Bohnen in den Vorratsraum des Bohnenbehälters zugänglich ist, und einer Betriebsstellung, in der die Einfüllöffnung des Bohnenbehälters innerhalb des Gehäuses verborgen ist, schwenkbar an dem Gehäuse des Kaffeevollautomaten gelagert ist, kann der Bohnenbehälter auf einfache und bequeme Weise mit Kaffeebohnen befüllt werden, ohne dass der Bohnenbehälter von dem Kaffeevollautomaten getrennt werden muss und ohne dass der Bohnenbehälter mit einer kostenintensiven und gegebenenfalls nicht stets zuverlässig funktionierenden Verschlusseinrichtung ausgestattet sein müsste. Gleichzeitig kann aufgrund der dann möglichen eingeschwenkten Betriebsstellung des Bohnenbehälters innerhalb des Kaffeevollautomaten eine Oberseite des Kaffeevollautomaten zu anderen Zwecken genutzt werden, ohne dass diese zum Nachfüllen des Bohnenbehälters freigehalten werden müsste.

Indem der erfindungsgemäße Bohnenbehälter um eine durch die Austrittsöffnung der Bodenwand des Bohnenbehälters laufende vertikale Drehachse zwischen der Befüllungsstellung und der Betriebsstellung schwenkbar an dem Gehäuse des Kaffeevollautomaten gelagert ist, kann die Einfüllöffnung auf einfache und zuverlässige Weise in die Befüllungsstellung gebracht werden, wobei insbesondere die Austrittsöffnung des Bohnenbehälters stets mit der Eintrittsöffnung des Mahlwerks verbunden bleiben kann, so dass ein unerwünschter Austritt einzelnen Bohnen oder Bohnenbruchstücken aus dem Bereich der Eintrittsöffnung des Mahlwerks nicht stattfinden kann und somit der Innenraum des Kaffeevollautomaten vor einer unerwünschten Verschmutzung verschont bleibt. Das Genusserlebnis an dem erfindungsgemäßen Kaffeevollautomaten bleibt einer nutzenden Person somit vollständig erhalten und ist im Vergleich zu den bekannten Kaffeevollautomaten sogar erhöht.

Da der Bohnenbehälter um eine vertikale Drehachse schwenkbar gelagert ist, bleibt der Bohnenbehälter auch trotz seiner Beweglichkeit zwischen der Befüllungsstellung und der Betriebsstellung stets in derselben Höhenlage, so dass das Verstellen des Bohnenbehälters mit geringem manuellen Kraftaufwand möglich ist.

Erfindungsgemäß läuft dabei die vertikale Drehachse, um die der Bohnenbehälter bei seiner Schwenkbewegung zwischen der Befüllungsstellung und der Betriebsstellung dreht, durch die Austrittsöffnung des Bohnenbehälters. Dies bewirkt, dass die Austrittsöffnung zumindest im Wesentlichen derart über einer Eintrittsöffnung des Mahlwerks verbleibt, dass die Verbindung der Austrittsöffnung des Bohnenbehälters zu der Eintrittsöffnung des Mahlwerks auch während der Schwenkbewegung des Bohnenbehälters zwischen der Befüllungsstellung und der Betriebsstellung bestehen bleibt und somit keine einzelnen Bohnen oder Bohnenbruchstücke zwischen dem Bohnenbehälter und dem Mahlwerk austreten können.

In der grundlegenden Ausgestaltung muss die Größe der Austrittsöffnung des Bohnenbehälters nicht notwendigerweise eine zur Eintrittsöffnung des Mahlwerks deckungsgleiche Größe und/oder Lage aufweisen. Es ist beispielsweise möglich, dass die Austrittsöffnung des Bohnenbehälters kleiner als die Eintrittsöffnung des Mahlwerks ausgebildet ist. Die Austrittsöffnung des Bohnenbehälters kann gegebenenfalls auch exzentrisch zur Eintrittsöffnung des Mahlwerks positioniert sein. Gegebenenfalls kann die Lage der Austrittsöffnung des Bohnenbehälters sich während der Schwenkbewegung des Bohnenbehälters relativ zur Eintrittsöffnung des Mahlwerks in einem gewissen Maße auch ändern.

In einer sehr gut funktionierenden Ausführungsform kann allerdings die vertikale Drehachse genau zentrisch durch den Mittelpunkt der Austrittsöffnung des Bohnenbehälters laufen.

Die Austrittsöffnung der Bodenwand kann demgemäß in einer speziellen Weiterbildung der Erfindung kreisförmig ausgebildet sein und der Bohnenbehälter mittels einer Lagerung an dem Gehäuse des Kaffeevollautomaten schwenkbar gelagert sein, die ausgebildet ist, den Bohnenbehälter um eine koaxial zur kreisförmigen Austrittsöffnung verlaufende vertikalen Drehachse zu schwenken.

In einer solchen Ausführungsform ist die Lagerung derart ausgebildet, dass während dem gesamten Schwenkweg, den der Bohnenbehälter zwischen seiner Befüllungsstellung und seiner Betriebsstellung ausführt, die Austrittsöffnung der Bodenwand des Bohnenbehälters stets dieselbe Position einnimmt. In dieser Ausführungsform bleibt die kreisförmige Austrittsöffnung der Bodenwand somit stets koaxial zur Eintrittsöffnung des Mahlwerks positioniert und ausgerichtet. Demgemäß kann auch die Eintrittsöffnung des Mahlwerks eine kreisförmige Gestalt aufweisen. Die Austrittsöffnung der Bodenwand des Bohnenbehälters und die Eintrittsöffnung des Mahlwerks können insoweit zumindest annähernd gleiche oder ähnliche Durchmesser aufweisen.

Da in einem solchen Fall die Austrittsöffnung der Bodenwand des Bohnenbehälters und die Eintrittsöffnung des Mahlwerks stets, d.h. auch unabhängig von der momentanen Schwenkstellung des Bohnenbehälters zwischen seiner Befüllungsstellung und seiner Betriebsstellung, in relativer Position unverändert zueinander verbunden bleiben, kann der Kaffeevollautomat auch während eines manuellen Nachfüllens des Bohnenbehälters mit neuen ganzen Kaffeebohnen in Betrieb bleiben, d.h. gleichzeitig ein Kaffeegetränk automatisch zubereitet werden, obwohl sich der Bohnenbehälter nicht in der Betriebsstellung befindet, sondern sich in der Befüllungsstellung befindet. Diese Option ist bei den bekannten Kaffeevollautomaten mit verstellbaren oder entnehmbaren Bohnenbehältern insoweit nicht möglich.

Die Bodenwand des Bohnenbehälters kann unterhalb der Austrittsöffnung einen kreisrohrförmigen Austragsstutzen aufweisen, durch den der Bohnenbehälter an einer Kreisöffnung in einer horizontalen Gehäusewand des Gehäuses schwenkbar gelagert ist.

Die Kreisöffnung der horizontalen Gehäusewand kann insoweit einen Übergangsbereich zwischen der Austrittsöffnung des Bohnenbehälters und der Eintrittsöffnung des Mahlwerks bilden. Insofern ist die Kreisöffnung der horizontalen Gehäusewand koaxial zur kreisförmige Austrittsöffnung der Bodenwand und koaxial zur kreisförmigen Eintrittsöffnung des Mahlwerks angeordnet.

Je nach vertikalem Abstand der Austrittsöffnung des Bohnenbehälters zur Eintrittsöffnung des Mahlwerks kann der kreisrohrförmige Austragsstutzen eine entsprechend kleinere oder größere Baulänge aufweisen.

Der kreisrohrförmigen Austragsstutzen des Bohnenbehälters kann Teil einer Lagerung bilden, durch welche der Bohnenbehälter an dem Gehäuse des Kaffeevollautomaten, bzw. an der horizontalen Gehäusewand des Kaffeevollautomaten schwenkbar gelagert ist. Eine äußere Mantelwand des kreisrohrförmigen Austragsstutzens des Bohnenbehälters kann insoweit in Zusammenwirken mit einer Innenmantelwand der Kreisöffnung der horizontalen Gehäusewand oder der Eintrittsöffnung des Mahlwerks ein entsprechendes Gleitlager bilden.

Der Austragsstutzen kann ein Rastmittel aufweisen, durch das der Bohnenbehälter an dem Gehäuse schwenkbar angerastet und gegen axiales Lösen in der Kreisöffnung der horizontalen Gehäusewand gesichert ist.

Das Rastmittel kann beispielsweise wenigstens einen von der Außenmantelwand des Austragsstutzens radial nach außen auskragenden Vorsprung gebildet werden, der in einer Einbaulage des Bohnenbehälter an dem Gehäuse einen Randabschnitt der Kreisöffnung der horizontalen Gehäusewand auf einer dem Bohnenbehälter abgewandten Seite der horizontalen Gehäusewand formschlüssig umgreift. Der Austragsstutzen kann einen einzigen Vorsprung oder mehrere Vorsprünge aufweisen, die sich insbesondere über einen Umfang gleichmäßig verteilen können. Gegebenenfalls kann sich ein jeweiliger Vorsprung auch über einen bestimmten Winkelbereich in Umfangsrichtung um die Außenmantelwand des Austragsstutzens erstrecken. So kann ein entsprechender Vorsprung sich beispielsweise um 90 Grad oder geringfügig weniger als 180 Grad in Umfangsrichtung um die Außenmantelwand des Austragsstutzens erstrecken.

Zwischen jeweils zwei unmittelbar benachbarten Vorsprüngen kann der Austragsstutzen eine randoffene Ausnehmung in seiner Stutzenwand aufweisen, um die elastischen Eigenschaften der Vorsprungs oder der mehreren Vorsprünge zu erhöhen. So wird es möglich, dass der Bohnenbehälter dadurch an dem Gehäuse des Kaffeevollautomaten schwenkbar montiert wird, indem der Austragsstutzen in die Kreisöffnung der horizontalen Gehäusewand in axialer Richtung eingesteckt wird, wobei die zunächst auf einem Größeren Durchmesser als die Kreisöffnung liegenden Vorsprünge sich radial nach innen elastisch verformen bzw. elastisch umbiegen können, so dass der Austragsstutzen in die Kreisöffnung der horizontalen Gehäusewand eindringen kann, die Vorsprünge hinter die Rückseite der Kreisöffnung der horizontalen Gehäusewand gelangen können und abschließend aufgrund federelastisch Rückstellkräfte hinter dem Randabschnitt der Kreisöffnung der horizontalen Gehäusewand auf der dem Bohnenbehälter abgewandten Seite der horizontalen Gehäusewand formschlüssig verrasten können. Dadurch ist ein axiales Zurückbewegen des Austragsstutzens aus der Kreisöffnung der horizontalen Gehäusewand heraus, nicht mehr möglich bzw. nur mit erheblichem Kraftaufwand möglich.

Die Bodenwand kann in Richtung der Austragsöffnung des Bohnenbehälters abschüssig, insbesondere trichterförmig abschüssig ausgebildet sein, so dass in dem Bohnenbehälter bevorratete Kaffeebohnen sich mittels Schwerkrafteinfluss in Richtung der Austragsöffnung des Bohnenbehälters bewegen können.

Aufgrund einer abschüssigen Bodenwand können die im Vorratsraum des Bohnenbehälters vorhandenen Kaffeebohnen allein aufgrund der Schwerkraft selbsttätig zu der Austragsöffnung des Bohnenbehälters rutschen.

In der Ausgestaltung des Bohnenbehälters mit einem quaderförmigen Vorratsraum, der eine größere Längserstreckung aufweist als seine Breite, können die Bodenwandabschnitte, die von einer Seitenwand des Bohnenbehälters hin zur Austragsöffnung einen kürzere Erstreckung aufweisen eine größere abschüssige Schräge aufweisen als andere Bodenwandabschnitte, die von einer benachbarten Seitenwand hin zur Austragsöffnung einen längere Erstreckung aufweisen. Mehrere auf die Austragsöffnung abschüssig zulaufende Bodenwandabschnitte des Bohnenbehälters können jeweils eben ausgebildet sein. Jeweils zwei unmittelbar benachbarte ebene Bodenwandabschnitte des Bohnenbehälters können von abgerundeten Verbindungsabschnitten der Bodenwand verbunden sein.

Der Bohnenbehälter als solches kann insbesondere als ein einstückiges Kunststoffspritzgussteil hergestellt sein.

Das Gehäuse kann eine Zwischendeckenwand aufweisen, oberhalb welcher der Bohnenbehälter angeordnet ist, wobei die Zwischendeckenwand eine Führungsschiene aufweist, die ausgebildet ist, den Bohnenbehälter in allen Behälterschwenkstellungen zwischen der Betriebsstellung und der Befüllungsstellung von unten abzustützen.

Eine Ausgestaltung der Zwischendeckenwand mit einer Führungsschiene kann insbesondere dann zweckmäßig sein, wenn der Bohnenbehälter beispielsweise einen quaderförmigen Vorratsraum bildet, der eine größere Längserstreckung aufweist als seine Breite. Dabei kann die Einfüllöffnung des Bohnenbehälters hinsichtlich der Längserstreckung des Vorratsraums von der Austragsöffnung des Bohnenbehälters deutlich oder möglichst weit entfernt angeordnet sein. In einer solchen Ausgestaltung kann es sein, dass eine ausschließliche schwenkbare Lagerung des Bohnenbehälters an dem Gehäuse im Bereich der Austragsöffnung des Bohnenbehälters, insbesondere im Bereich eines Austragsstutzens des Bohnenbehälters nicht ausreichen kann, um auftretende Kippkräfte, die auf das Lager wirken, zuverlässig aufnehmen zu können. In solchen Ausgestaltungen kann es daher zweckmäßig sein, die schwenkbare Lagerung des Bohnenbehälters zusätzlich um eine Führungsschiene zu ergänzen.

Die Führungsschiene bildet dann insoweit einen Teil der schwenkbaren Lagerung des Bohnenbehälters an dem Gehäuse, insbesondere an der Zwischendeckenwand des Gehäuses. Der auskragende Behälterabschnitt, der von der Austragsöffnung des Bohnenbehälters entfernt liegt, wird dabei von der Führungsschiene von unten unterstützt. Dies bedeutet, dass während des Schwenkens des Bohnenbehälters der auskragende Behälterabschnitt des Bohnenbehälters fortlaufend auf der Führungsschiene aufliegt und dadurch gegen die Oberseite des Gehäuses, insbesondere gegen die Zwischendeckenwand des Gehäuses abgestützt wird. Eine solche abstützende Lagerung mittels der Führungsschiene reduziert Kippkräfte, so dass der Teil der Lagerung im Bereich der Austragsöffnung des Bohnenbehälters von Kippkräften entlastet ist. Dies verbessert auch ein leichtgängiges manuelles Schwenken des Bohnenbehälters mit geringer Handkraft.

Die Führungsschiene der Zwischendeckenwand des Gehäuses kann sich koaxial zur Drehachse, um die der Bohnenbehälter schwenkbar ist, längserstrecken.

Indem sich die Führungsschiene koaxial zur Drehachse erstreckt, liegt die Unterseite des Bohnenbehälters stets auf demselben Umfang von der Drehachse entfernt auf der Führungsschiene auf, unabhängig davon in welcher aktuellen Schwenkstellung der Bohnenbehälter sich momentan zwischen der Betriebsstellung und der Befüllungsstellung befindet. Dies bewirkt gleichförmige Kraftverhältnisse an dem Teil der Lagerung im Bereich der Austragsöffnung des Bohnenbehälters, unabhängig davon, in welcher aktuellen Schwenkstellung der Bohnenbehälter sich momentan zwischen der Betriebsstellung und der Befüllungsstellung befindet.

Der Bohnenbehälter kann an einer Unterseite seiner Bodenwand einen nach unten vorspringenden Stift aufweisen, der in eine korrespondierende Nut an der Führungsschiene der Zwischendeckenwand des Gehäuses eingreift.

Wenn die Führungsschiene eine Nut aufweist, werden mittels der Nut an der Führungsschiene zwei parallel zueinander verlaufende Führungswände geschaffen, zwischen denen der nach unten vorspringende Stift des Bohnenbehälters geführt ist. Eine innere Führungswand liegt dabei auf einem kleineren Radius um die Drehachse, um welche der Bohnenbehälter schwenkt und eine äußere Führungswand liegt dabei auf einem größeren Radius um die Drehachse, um welche der Bohnenbehälter schwenkt. Der nach unten vorspringende Stift des Bohnenbehälters läuft demgemäß auf einem dazwischen liegenden Radius um die Drehachse.

Der nach unten vorspringende Stift kann unterschiedlich gestaltete Querschnittsformen aufweisen. Der Stift kann beispielsweise im Querschnitt eine Kreisform aufweisen. Der Stift kann alternativ im Querschnitt beispielsweise eine rechteckige oder quadratische Form aufweisen. In einer speziellen Ausführungsvariante kann der Stift eine Bogenform aufweisen, deren Bogenkrümmung dem Radius entspricht, auf dem der Stift in der Nut, d.h. zwischen der inneren Führungswand und der äußeren Führungswand, geführt ist.

In die Nut kann gegebenenfalls ein Schmiermittel eingebracht sein, um die Reibung zwischen dem Stift und der Führungsschiene zu verringern.

Der Bohnenbehälter kann einen der Austragsöffnung gegenüberliegenden Aufgabebereich aufweisen, an dem die Einfüllöffnung des Bohnenbehälters ausgebildet ist.

Der Aufgabebereich kann durch einen Teilabschnitt der Bodenwand des Bohnenbehälters und einen Teilabschnitt der wenigstens einen Seitenwand des Bohnenbehälters begrenzt sein, so dass ein oberer Öffnungsbereich gebildet wird, der insoweit die Einfüllöffnung des Bohnenbehälters bildet.

Der Aufgabebereich kann analog der Bodenwand des Bohnenbehälters eine abschüssig schräge Aufgabefläche aufweisen, auf welche ganze Kaffeebohnen aus einer Packung in den Aufgabebereich aufgegeben werden können. Die aufgegebenen Kaffeebohnen können dann aufgrund der abschüssig schrägen Aufgabefläche mittels Schwerkrafteinfluss in den Vorratsraum des Bohnenbehälters hineinrutschen. Dort angekommen können die Kaffeebohnen aufgrund der abschüssigen Bodenwand weiterrutschen, und zwar hin zu der Austragsöffnung des Bohnenbehälters. Aufgrund der erfindungsgemäßen Ausgestaltung des Bohnenbehälters kann somit jederzeit eine Portion an ganzen Bohnen in dem Mahlwerk zu Kaffeepulver gemahlen werden, auch wenn der Bohnenbehälter sich in der Befüllungsstellung befindet und gleichzeitig Kaffeebohnen aus einer Nachfüll-Packung in den Aufgabebereich aufgegeben werden.

Der Aufgabebereich des Bohnenbehälters kann in der Befüllungsstellung von der Vorderseite des Kaffeevollautomaten zugänglich sein und dabei die Einfüllöffnung des Bohnenbehälters freilegen, so dass Kaffeebohnen von der Vorderseite des Kaffeevollautomaten in den Vorratsraum des Bohnenbehälters einfüllbar sind, während der Vorratsraum des Bohnenbehälters in der Befüllungsstellung hinter einer Gerätefront des Kaffeevollautomaten zumindest überwiegend oder weitgehend verborgen bleibt.

Der Aufgabebereich des Bohnenbehälters bzw. die Einfüllöffnung des Bohnenbehälters wird also in einer solchen Ausführungsform durch das Schwenken des Bohnenbehälters aus einer in der Betriebsstellung innerhalb des Kaffeevollautomaten gelegenen Position in eine vor der Gerätefront des Kaffeevollautomaten liegenden äußeren Position bewegt. Indem der Aufgabebereich des Bohnenbehälters bzw. die Einfüllöffnung des Bohnenbehälters vor die Gerätefront des Kaffeevollautomaten bewegt wird, kann ein Befüllen des Vorratsraumes des Bohnenbehälters in besonders bequemer Weise durchgeführt werden.

Das Schwenken des Bohnenbehälters kann in einer ersten Ausführungsvariante manuell erfolgen, indem eine Person den Bohnenbehälter greift und mit der Hand aus der Betriebsstellung in die Befüllungsstellung bewegt. In einer alternativen Ausführungsvariante kann das Schwenken des Bohnenbehälters automatisch erfolgen. Dazu kann ein elektrischer Antriebsmotor an den Bohnenbehälter gekoppelt sein, der angesteuert durch eine Steuervorrichtung des Kaffeevollautomaten und in Abhängigkeit einer manuellen Betätigung eines mit der Steuervorrichtung verbundenen Eingabemittels den Bohnenbehälter automatisch aus seiner Betriebsstellung in die Befüllungsstellung bewegt oder alternativ aus der Befüllungsstellung wieder in die Betriebsstellung bewegt.

Der Aufgabebereich des Bohnenbehälters kann in der Betriebsstellung innerhalb des Kaffeevollautomaten, und insbesondere hinter einer Gerätefront des Kaffeevollautomaten verborgen positioniert sein.

Die schwenkbare Lagerung des Bohnenbehälters an dem Gehäuse, insbesondere an der Zwischendeckenwand des Gehäuses, kann derart ausgebildet sein, dass nach einem Schwenken des Bohnenbehälters aus seiner Befüllungsstellung in die Betriebsstellung der Aufgabebereich und somit auch die Einfüllöffnung des Bohnenbehälters in einen inneren Hohlraum des Kaffeevollautomaten bewegt ist. In einer solchen Position ist der Aufgabebereich und die Einfüllöffnung von außerhalb des Kaffeevollautomaten optisch nicht mehr zu erkennen. Außerdem ist die Einfüllöffnung in einer solchen Position durch wenigstens eine sich über die Einfüllöffnung erstreckende Deckenwand oder Trennwand des Kaffeevollautomaten überdeckt. Insoweit besteht keine Gefahr, dass Fremdkörper in die Einfüllöffnung des Bohnenbehälters hineinfallen könnten. Darüber hinaus können auf der obersten Deckenwand des Kaffeevollautomaten beispielsweise Gegenstände abgestellt werden, obwohl sich der Bohnenbehälter unmittelbar darunter befindet. Durch eine solche zumindest weitgehend abgeschlossene Anordnung des Bohnenbehälters kann einerseits ein separater Deckel für den Bohnenbehälter entfallen und andererseits ist der Bohnenbehälter dennoch ausreichend gut abgeschlossen, so dass das Aroma der in dem Bohnenbehälter vorhandenen Kaffeebohnen weitgehend erhalten bleibt und sich nicht verflüchtigt.

Die Einfüllöffnung des Bohnenbehälters, insbesondere der Aufgabebereich des Bohnenbehälters kann über einen vorderen Fensterausschnitt in einer Gerätefront des Kaffeevollautomaten hindurch aus der Betriebsstellung des Bohnenbehälters in die Befüllungsstellung des Bohnenbehälters hinausschwenkbar sein.

Der Aufgabebereich des Bohnenbehälters bzw. die Einfüllöffnung des Bohnenbehälters wird also in einer solchen Ausführungsform durch das Schwenken des Bohnenbehälters aus einer in der Betriebsstellung innerhalb des Kaffeevollautomaten gelegenen Position in eine vor der Gerätefront des Kaffeevollautomaten liegenden äußeren Position bewegt. Indem der Aufgabebereich des Bohnenbehälters bzw. die Einfüllöffnung des Bohnenbehälters vor die Gerätefront des Kaffeevollautomaten bewegt wird, kann ein Befüllen des Vorratsraumes des Bohnenbehälters in besonders bequemer Weise durchgeführt werden.

Der vordere Fensterausschnitt in der Gerätefront des Kaffeevollautomaten kann mit einer schwenkbaren Klappe versehen sein, welche in der Betriebsstellung des Bohnenbehälters den vorderen Fensterausschnitt verschließt und in der Befüllungsstellung des Bohnenbehälters den vordere Fensterausschnitt freigibt, so dass die Einfüllöffnung des Bohnenbehälters, insbesondere der Aufgabebereich des Bohnenbehälters aus dem vorderen Fensterausschnitt herausragen kann.

Indem eine schwenkbare Klappe an der Gerätefront des Kaffeevollautomaten vorgesehen wird, kann ein optisch besonders ansprechendes Erscheinungsbild des Kaffeevollautomaten erreicht werden. Aufgrund einer solchen schwenkbaren Klappe kann die Gerätefront des Kaffeevollautomaten auch auf einfache und wirksame Weise gereinigt werden. Es kann sich insoweit aufgrund der schwenkbaren Klappe eine Gerätefront ergeben, die weniger zerklüftet ist, als es der Fall wäre, wenn der Kaffeevollautomat ohne Klappe ausgebildet wäre.

Die schwenkbare Klappe kann in einer ersten Ausführungsvariante manuell bewegbar sein, indem eine Person die Klappe greift, beispielsweise an einem Griffabschnitt der Klappe ergreift, und mit der Hand aus einer Schließstellung der Klappe in ein Offenstellung der Klappe bewegt, so dass der vordere Fensterausschnitt in der Gerätefront freigegeben wird und der Aufgabebereich des Bohnenbehälters herausgeschwenkt werden kann.

In einer alternativen Ausführungsvariante kann das Schwenken der Klappe automatisch erfolgen. Dazu kann ein elektrischer Antriebsmotor an die Klappe gekoppelt sein, der angesteuert durch die Steuervorrichtung des Kaffeevollautomaten und in Abhängigkeit einer manuellen Betätigung eines mit der Steuervorrichtung verbundenen Eingabemittels die Klappe automatisch aus seiner Schließstellung in die Offenstellung bewegt oder alternativ aus der Offenstellung wieder in die Schließstellung bewegt.

Ein automatisches Schwenken der Klappe kann mit einem automatischen Schwenken des Bohnenbehälters gekoppelt, insbesondere synchronisiert sein.

Der Bohnenbehälter kann eine Baugröße aufweisen, die eine Baubreite umfasst, welche sich in der Betriebsstellung des Bohnenbehälters über annähernd die gesamte Breite des Kaffeevollautomaten erstreckt.

Durch eine solche Gestaltung der Baugröße des Bohnenbehälters kann ein besonders großer Vorratsraum im Bohnenbehälter geschaffen werden, so dass eine besonders große Menge an ganzen Kaffeebohnen in dem Bohnenbehälter vorgehalten werden kann. Dies ermöglicht es, eine sehr große Anzahl an Portionen eines Kaffeegetränks in kurzer Zeit herstellen zu können. Außerdem muss der Bohnenbehälter nur noch weniger oft mit Kaffeebohnen nachgefüllt werden. Dies reduziert den Pflegeaufwand für den Kaffeevollautomaten.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, vorteilhafte Merkmale von alternativen Ausführungsvarianten der Erfindung darstellen.

Es zeigen:
- Fig. 1: eine schematische Prinzipdarstellung eines beispielhaften erfindungsgemäßen Kaffeevollautomaten mit einem Bohnenbehälter, einem Mahlwerk, einer Brüheinheit, einem Wasserbehälter und einer Zapfstelle für Kaffee,
- Fig. 2: eine perspektivische Darstellung des beispielhaften erfindungsgemäßen Kaffeevollautomaten gemäß Fig. 1, wobei das Mahlwerk, die Brüheinheit, der Wasserbehälter und die Zapfstelle für Kaffee entfernt sind, um ein Gehäuse des Kaffeevollautomaten darzustellen,
- Fig. 3: eine Ansicht von oben auf den beispielhaften erfindungsgemäßen Kaffeevollautomaten gemäß Fig. 1 mit einem daran gelagerten erfindungsgemäßen Bohnenbehälter in seiner Betriebsstellung,
- Fig. 4: eine perspektivische Darstellung des beispielhaften erfindungsgemäßen Kaffeevollautomaten gemäß Fig. 1 mit dem daran gelagerten erfindungsgemäßen Bohnenbehälter in der Betriebsstellung gemäß Fig. 3, und
- Fig. 5: eine perspektivische Darstellung des beispielhaften erfindungsgemäßen Kaffeevollautomaten gemäß Fig. 1 mit dem daran gelagerten erfindungsgemäßen Bohnenbehälter in seiner Befüllungsstellung.

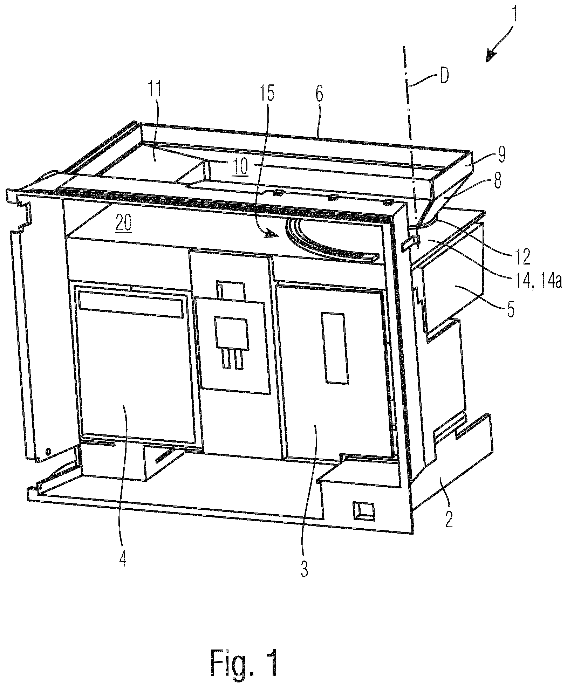

In der Fig. 1 ist eine beispielhafte Ausführungsform eines Kaffeevollautomaten 1 dargestellt.

Der Kaffeevollautomat 1 weist ein Gehäuse 2 auf.

In dem Gehäuse 2 ist eine entnehmbare Brüheinheit 3 angeordnet, die ausgebildet ist zum Aufbrühen einer Portion von gemahlenem Kaffeepulver mit heißem Wasser. Dazu kann in dem Gehäuse 2 ein Wasservorrat 4 angeordnet sein, aus dem Wasser in die Brüheinheit 3 gefördert werden kann.

Der Kaffeevollautomat 1 umfasst ein der Brüheinheit 3 vorgelagertes Mahlwerk 5, das ausgebildet ist zum portionsweisen Mahlen von ganzen Kaffeebohnen zu einem gemahlenen Kaffeepulver.

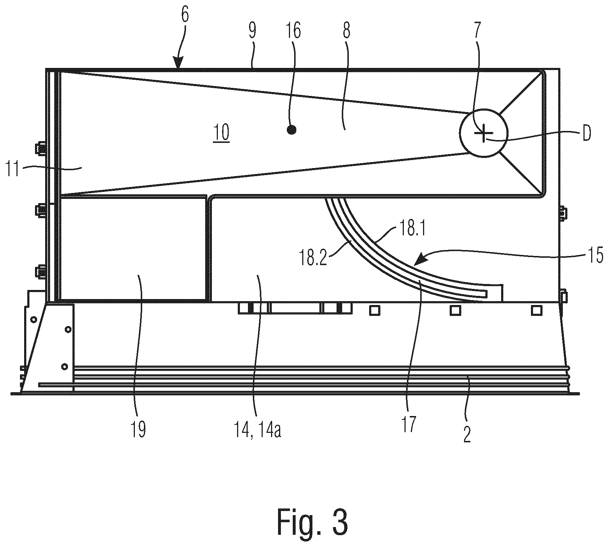

Der Kaffeevollautomat 1 umfasst außerdem einen dem Mahlwerk 5 vorgelagerten Bohnenbehälter 6, der ausgebildet ist zum Bevorraten einer für mehrere Portionen von gemahlenem Kaffeepulver ausreichenden Menge an ganzen Kaffeebohnen in dem Kaffeevollautomat 1, wobei der Bohnenbehälter 6 eine mit einer Austragsöffnung 7 (Fig. 3) versehene Bodenwand 8 und wenigstens eine Seitenwand 9 aufweist, wobei die Bodenwand 8 und die wenigstens eine Seitenwand 9 einen Vorratsraum 10 für die ganzen Kaffeebohnen begrenzen.

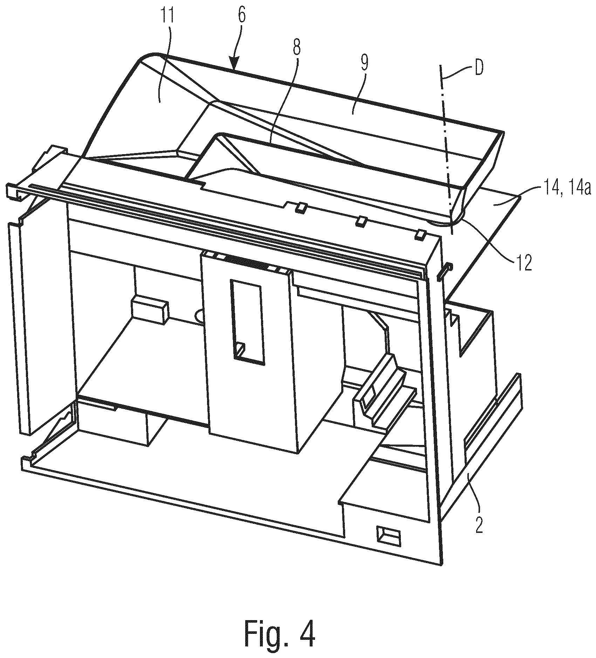

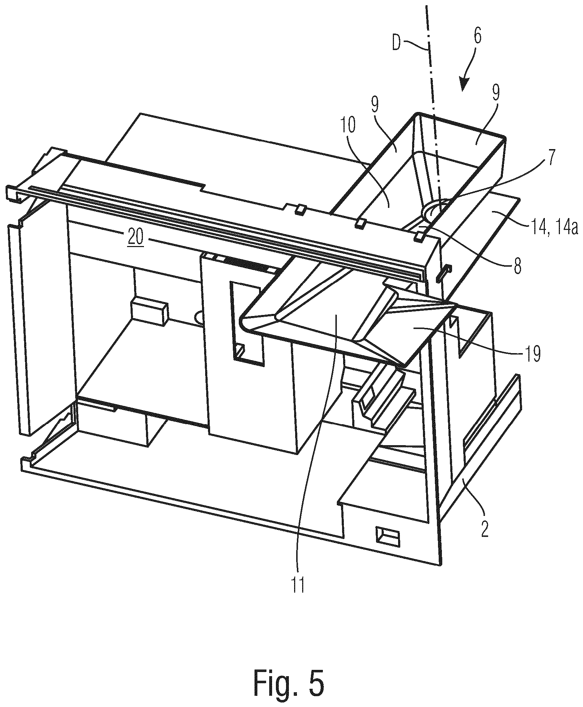

Der Bohnenbehälter 6 ist um eine durch die Austrittsöffnung 7 der Bodenwand 8 des Bohnenbehälters 6 laufende vertikale Drehachse D zwischen einer Befüllungsstellung, wie sie in Fig. 5 aufgezeigt ist, in der eine Einfüllöffnung 11 des Bohnenbehälters 6 zum manuellen Einfüllen von ganzen Bohnen in den Vorratsraum 10 des Bohnenbehälters 6 zugänglich ist, und einer Betriebsstellung, wie sie in Fig. 4 aufgezeigt ist, in der die Einfüllöffnung 11 des Bohnenbehälters 6 innerhalb des Gehäuses 2 verborgen ist, schwenkbar an dem Gehäuse 2 des Kaffeevollautomaten 1 gelagert.

Im Falle des vorliegenden Ausführungsbeispiels ist die Austrittsöffnung 7 der Bodenwand 8 kreisförmig ausgebildet, wie dies insbesondere in Fig. 3 erkennbar ist, und der Bohnenbehälter 6 ist mittels einer Lagerung 12 an dem Gehäuse 2 des Kaffeevollautomaten 1 schwenkbar gelagert, wobei die Lagerung 12 ausgebildet ist, den Bohnenbehälter 6 um die koaxial zur kreisförmigen Austrittsöffnung 7 verlaufende vertikalen Drehachse D zu schwenken.

Die Bodenwand 8 weist unterhalb der Austrittsöffnung 7 einen kreisrohrförmigen Austragsstutzen 13 auf, durch den der Bohnenbehälter 6 an einer Kreisöffnung in einer horizontalen Gehäusewand 14 des Gehäuses 2 schwenkbar gelagert ist.

Die horizontalen Gehäusewand 14 bildet im Falle des vorliegenden Ausführungsbeispiels eine Zwischendeckenwand 14a des Gehäuses 2 des Kaffeevollautomaten **1.** Das Mahlwerk 5 ist diesem speziellen Fall unterhalb der Zwischendeckenwand 14a angeordnet und der Bohnenbehälter 6 ist oberhalb der Zwischendeckenwand 14a angeordnet.

Wie insbesondere in Fig. 5 erkennbar ist, ist die Bodenwand 8 in Richtung der Austragsöffnung 7 des Bohnenbehälters 6 abschüssig, insbesondere trichterförmig abschüssig ausgebildet, so dass in dem Bohnenbehälter 6 bevorratete Kaffeebohnen sich mittels Schwerkrafteinfluss in Richtung der Austragsöffnung 7 des Bohnenbehälters 6 bewegen können.

Im Falle des vorliegenden Ausführungsbeispiels, bei dem das Gehäuse 2 die Zwischendeckenwand 14a aufweist, wobei oberhalb der Zwischendeckenwand 14a der Bohnenbehälter 6 angeordnet ist und unterhalb der Zwischendeckenwand 14a das Mahlwerk 5 angeordnet ist, weist die Zwischendeckenwand 14a außerdem eine Führungsschiene 15 auf, die ausgebildet ist, den Bohnenbehälter 6 in allen Behälterschwenkstellungen zwischen der Betriebsstellung, wie sie in Fig. 4 aufgezeigt ist, und der Befüllungsstellung, wie sie in Fig. 5 aufgezeigt ist, von unten abzustützen.

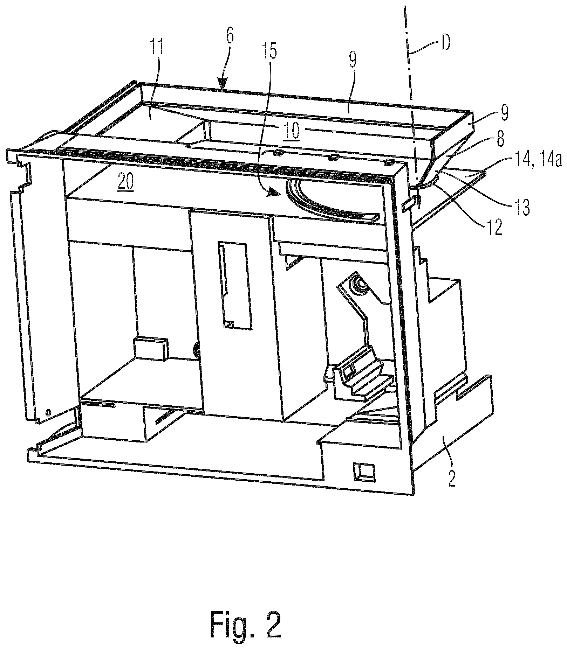

Im Falle des vorliegenden Ausführungsbeispiels bildet die Führungsschiene 15, wie sie insbesondere in Fig. 1 bis Fig. 3 gargestellt ist, einen Teil der schwenkbaren Lagerung des Bohnenbehälters 6 an dem Gehäuse 2, insbesondere an der Zwischendeckenwand 14a des Gehäuses 2. Der auskragende Behälterabschnitt, der von der Austragsöffnung 7 des Bohnenbehälters 6 entfernt liegt, wird dabei von der Führungsschiene 15 von unten unterstützt. Dies bedeutet, dass während des Schwenkens des Bohnenbehälters 6 der auskragende Behälterabschnitt des Bohnenbehälters 6 fortlaufend auf der Führungsschiene 15 aufliegt und dadurch gegen die Oberseite des Gehäuses 2, insbesondere gegen die Zwischendeckenwand 14a des Gehäuses 2 abgestützt wird. Eine solche abstützende Lagerung mittels der Führungsschiene 15 reduziert Kippkräfte, so dass der Teil der Lagerung im Bereich der Austragsöffnung 7 des Bohnenbehälters 6 von Kippkräften entlastet ist.

Die Führungsschiene 15 der Zwischendeckenwand 14a des Gehäuses 2 erstreckt sich im Falle des vorliegenden Ausführungsbeispiels koaxial zur Drehachse D, um die der Bohnenbehälter 6 schwenkt.

Indem sich die Führungsschiene 15 koaxial zur Drehachse D erstreckt, liegt die Unterseite des Bohnenbehälters 6 stets auf demselben Umfang von der Drehachse D entfernt auf der Führungsschiene 15 auf, unabhängig davon in welcher aktuellen Schwenkstellung der Bohnenbehälter 6 sich momentan zwischen der Betriebsstellung (Fig. 4) und der Befüllungsstellung (Fig. 5) befindet. Dies bewirkt gleichförmige Kraftverhältnisse an dem Teil der Lagerung im Bereich der Austragsöffnung 7 des Bohnenbehälters 6, unabhängig davon in welcher aktuellen Schwenkstellung der Bohnenbehälter 6 sich momentan zwischen der Betriebsstellung (Fig. 4) und der Befüllungsstellung (Fig. 5) befindet.

Der Bohnenbehälter 6 kann an einer Unterseite seiner Bodenwand 8 einen nach unten vorspringenden Stift 16 aufweisen, der in eine korrespondierende Nut 17 an der Führungsschiene 15 der Zwischendeckenwand 14a des Gehäuses 2 eingreifen kann. Der vorspringende Stift 16 ist schematisch in Fig. 3 aufgezeigt, in einer Ansicht axial von oben, so dass der Stift 16 in Fig. 3 als ein Punkt erscheint.

Wenn die Führungsschiene 15, wie im Falle des vorliegenden Ausführungsbeispiels eine Nut 17 aufweist, werden mittels der Nut 17 an der Führungsschiene 15 zwei parallel zueinander verlaufende Führungswände 18.1, 18.2 geschaffen, zwischen denen der nach unten vorspringende Stift 16 des Bohnenbehälters 6 geführt ist. Eine innere Führungswand 18.1 liegt dabei auf einem kleineren Radius um die Drehachse D, um welche der Bohnenbehälter 6 schwenkt und eine äußere Führungswand 18.2 liegt dabei auf einem größeren Radius um die Drehachse D, um welche der Bohnenbehälter 6 schwenkt. Der nach unten vorspringende Stift 16 des Bohnenbehälters 6 läuft demgemäß auf einem dazwischen liegenden Radius um die Drehachse D.

Wie insbesondere in Fig. 5 erkennbar ist, kann der Bohnenbehälter 6 einen der Austragsöffnung 7 gegenüberliegenden Aufgabebereich 19 aufweisen, an dem die Einfüllöffnung 11 des Bohnenbehälters 6 ausgebildet ist.

Der Aufgabebereich 19 des Bohnenbehälters 6 ist in der Befüllungsstellung, wie sie in Fig. 5 dargestellt ist, von der Vorderseite des Kaffeevollautomaten 1 zugänglich, wobei die Einfüllöffnung 11 des Bohnenbehälters 6 freigelegt ist, so dass Kaffeebohnen von der Vorderseite des Kaffeevollautomaten 1 in den Vorratsraum 10 des Bohnenbehälters 6 eingefüllt werden können, während der Vorratsraum 10 des Bohnenbehälters 6 in der Befüllungsstellung zumindest überwiegen do der weitgehend hinter einer Gerätefront des Kaffeevollautomaten 1 verborgen bleibt.

Der Aufgabebereich 19 des Bohnenbehälters 6 ist in der Betriebsstellung, wie sie in Fig. 4 dargestellt ist, hingegen innerhalb des Kaffeevollautomaten 1, und insbesondere hinter der Gerätefront des Kaffeevollautomaten 1 verborgen positioniert.

Die Einfüllöffnung 11 des Bohnenbehälters 6, insbesondere der Aufgabebereich 19 des Bohnenbehälters 6 ist über einen vorderen Fensterausschnitt 20, wie er insbesondere in Fig. 1, Fig. 2 und Fig. 5 aufgezeigt ist, in einer Gerätefront des Kaffeevollautomaten 1 hindurch aus der Betriebsstellung des Bohnenbehälters 6 in die Befüllungsstellung des Bohnenbehälters 6 hinausschwenkbar.

Der Bohnenbehälter 6 kann, wie dargestellt, eine Baugröße aufweisen, die eine Baubreite umfasst, welche sich in der Betriebsstellung des Bohnenbehälters 6 über annähernd die gesamte Breite des Kaffeevollautomaten 1 erstreckt.

## Patentansprüche

1. Kaffeevollautomat (1), aufweisend:
- ein Gehäuse (2),
- eine im Gehäuse (2) angeordnete Brüheinheit (3), die ausgebildet ist zum Aufbrühen einer Portion von gemahlenem Kaffeepulver mit heißem Wasser,
- ein der Brüheinheit (3) vorgelagertes Mahlwerk (5), das ausgebildet ist zum portionsweisen Mahlen von ganzen Kaffeebohnen zu einem gemahlenen Kaffeepulver, sowie
- einen dem Mahlwerk (5) vorgelagerten Bohnenbehälter (6), der ausgebildet ist zum Bevorraten einer für mehrere Portionen von gemahlenem Kaffeepulver ausreichenden Menge an ganzen Kaffeebohnen in dem Kaffeevollautomat (1), wobei der Bohnenbehälter (6) eine mit einer Austragsöffnung (7) versehene Bodenwand (8) und wenigstens eine Seitenwand (9) aufweist, wobei die Bodenwand (8) und die wenigstens eine Seitenwand (9) einen Vorratsraum (10) für die ganzen Kaffeebohnen begrenzen,
**dadurch gekennzeichnet, dass**
der Bohnenbehälter (6) um eine durch die Austrittsöffnung (7) der Bodenwand (8) des Bohnenbehälters (6) laufende vertikale Drehachse (D) zwischen einer Befüllungsstellung, in der eine Einfüllöffnung (11) des Bohnenbehälters (6) zum manuellen Einfüllen von ganzen Bohnen in den Vorratsraum (10) des Bohnenbehälters (6) zugänglich ist, und einer Betriebsstellung, in der die Einfüllöffnung (11) des Bohnenbehälters (6) innerhalb des Gehäuses (2) verborgen ist, schwenkbar an dem Gehäuse (2) des Kaffeevollautomaten (1) gelagert ist.

2. Kaffeevollautomat (1) nach Anspruch 1, **dadurch gekennzeichnet, dass** die Austrittsöffnung (7) der Bodenwand (8) kreisförmig ausgebildet ist und der Bohnenbehälter (6) mittels einer Lagerung (12) an dem Gehäuse (2) des Kaffeevollautomaten (1) schwenkbar gelagert ist, die ausgebildet ist, den Bohnenbehälter (6) um eine koaxial zur kreisförmigen Austrittsöffnung (7) verlaufende vertikalen Drehachse (D) zu schwenken.

3. Kaffeevollautomat (1) nach Anspruch 1 oder 2, **dadurch gekennzeichnet, dass** die Bodenwand (8) unterhalb der Austrittsöffnung (7) einen kreisrohrförmigen Austragsstutzen (13) aufweist, durch den der Bohnenbehälter (6) an einer Kreisöffnung in einer horizontalen Gehäusewand (14) des Gehäuses (2) schwenkbar gelagert ist.

4. Kaffeevollautomat (1) nach Anspruch 3, **dadurch gekennzeichnet, dass** der Austragsstutzen (13) ein Rastmittel aufweist, durch das der Bohnenbehälter (6) an dem Gehäuse (2) schwenkbar angerastet und gegen axiales Lösen in der Kreisöffnung der horizontalen Gehäusewand (14) gesichert ist.

5. Kaffeevollautomat (1) nach einem der Ansprüche 1 bis 4, **dadurch gekennzeichnet, dass** die Bodenwand (8) in Richtung der Austragsöffnung (7) des Bohnenbehälters (6) abschüssig, insbesondere trichterförmig abschüssig ausgebildet ist, so dass in dem Bohnenbehälter (6) bevorratete Kaffeebohnen sich mittels Schwerkrafteinfluss in Richtung der Austragsöffnung (7) des Bohnenbehälters (6) bewegen können.

6. Kaffeevollautomat (1) nach einem der Ansprüche 1 bis 5, **dadurch gekennzeichnet, dass** das Gehäuse (2) eine Zwischendeckenwand (14a) aufweist, oberhalb welcher der Bohnenbehälter (6) angeordnet ist und die Zwischendeckenwand (14a) eine Führungsschiene (15) aufweist, die ausgebildet ist, den Bohnenbehälter (6) in allen Behälterschwenkstellungen zwischen der Betriebsstellung und der Befüllungsstellung von unten abzustützen.

7. Kaffeevollautomat (1) nach Anspruch 6, **dadurch gekennzeichnet, dass** die Führungsschiene (15) der Zwischendeckenwand (14a) des Gehäuses (2) sich koaxial zur Drehachse (D), um die der Bohnenbehälter (6) schwenkbar ist, längserstreckt.

8. Kaffeevollautomat (1) nach Anspruch 7, **dadurch gekennzeichnet, dass** der Bohnenbehälter (6) an einer Unterseite seiner Bodenwand (8) einen nach unten vorspringenden Stift (16) aufweist, der in eine korrespondierende Nut (17) an der Führungsschiene (15) der Zwischendeckenwand (14a) des Gehäuses (2) eingreift.

9. Kaffeevollautomat (1) nach einem der Ansprüche 1 bis 8, **dadurch gekennzeichnet, dass** der Bohnenbehälter (6) einen der Austragsöffnung (7) gegenüberliegenden Aufgabebereich (19) aufweist, an dem die Einfüllöffnung (11) des Bohnenbehälters (6) ausgebildet ist.

10. Kaffeevollautomat (1) nach Anspruch 9, **dadurch gekennzeichnet, dass** der Aufgabebereich (19) des Bohnenbehälters (6) in der Befüllungsstellung von der Vorderseite des Kaffeevollautomaten (1) zugänglich ist und dabei die Einfüllöffnung (11) des Bohnenbehälters (6) freilegt, so dass Kaffeebohnen von der Vorderseite des Kaffeevollautomaten (1) in den Vorratsraum (10) des Bohnenbehälters (6) einfüllbar sind, während der Vorratsraum (10) des Bohnenbehälters (6) in der Befüllungsstellung hinter einer Gerätefront des Kaffeevollautomaten (1) verborgen bleibt.

11. Kaffeevollautomat (1) nach Anspruch 9 oder 10, **dadurch gekennzeichnet, dass** der Aufgabebereich (19) des Bohnenbehälters (6) in der Betriebsstellung innerhalb des Kaffeevollautomaten (1), und insbesondere hinter einer Gerätefront des Kaffeevollautomaten (1) verborgen positioniert ist.

12. Kaffeevollautomat (1) nach einem der Ansprüche 1 bis 11, **dadurch gekennzeichnet, dass** die Einfüllöffnung (11) des Bohnenbehälters (6), insbesondere der Aufgabebereich (19) des Bohnenbehälters (6) über einen vorderen Fensterausschnitt (20) in einer Gerätefront des Kaffeevollautomaten (1) hindurch aus der Betriebsstellung des Bohnenbehälters (6) in die Befüllungsstellung des Bohnenbehälters (6) hinausschwenkbar ist.

13. Kaffeevollautomat (1) nach Anspruch 12, **dadurch gekennzeichnet, dass** der vordere Fensterausschnitt (20) in der Gerätefront des Kaffeevollautomaten (1) mit einer schwenkbaren Klappe versehen ist, welche in der Betriebsstellung des Bohnenbehälters (6) den vorderen Fensterausschnitt (20) verschließt und in der Befüllungsstellung des Bohnenbehälters (6) den vordere Fensterausschnitt (20) freigibt, so dass die Einfüllöffnung (11) des Bohnenbehälters (6), insbesondere der Aufgabebereich (19) des Bohnenbehälters (6) aus dem vorderen Fensterausschnitt (20) herausragen kann.

14. Kaffeevollautomat (1) nach einem der Ansprüche 1 bis 13, **dadurch gekennzeichnet, dass** der Bohnenbehälter (6) eine Baugröße aufweist, die eine Baubreite umfasst, welche sich in der Betriebsstellung des Bohnenbehälters (6) über annähernd die gesamte Breite des Kaffeevollautomaten (1) erstreckt.
